Europäisches Patentamt

European Patent Office

Office européen des brevets

(19)

(11) Veröffentlichungsnummer: **0 526 686 A1**

## EUROPÄISCHE PATENTANMELDUNG

(12)

(21) Anmeldenummer: **92102238.0**

(22) Anmeldetag: **11.02.92**

(51) Int. Cl.5: **H04L 12/56**, H04Q 9/00, G08C 17/00

---

(30) Priorität: **10.06.91 DE 9113511 U**

(43) Veröffentlichungstag der Anmeldung:
**10.02.93 Patentblatt 93/06**

(84) Benannte Vertragsstaaten:
**AT BE CH DE DK ES FR GB GR IT LI LU NL SE**

(71) Anmelder: **Deutsche Aerospace Aktiengesellschaft**
**Postfach 80 11 09**
**W-8000 München 80(DE)**

(72) Erfinder: **Ilg, Karl-Heinz, Dr.**
**Max Löw-Strasse 15**
**W-8014 Neubiberg(DE)**

---

(54) **Intelligentes Fernmess- und Stellsystem.**

(57) Intelligentes Fernmeß- und Stellsystem, enthalten in einer Gehäuseeinheit (Terminal) (1-4) für die Erfassung, Verarbeitung und Speicherung analoger und/oder digitaler Daten und der Aufzeichnung in einem Speicher (22) und Übertragung in einem geeigneten Übertragungsweg auf Befehl, wobei jede Einheit (Terminal) mit weiteren Einheiten (beliebiger Zahl) in einem Netzwerk zusammenschaltbar ist derart, daß der in jeder Einheit eingebaute Knotenrechner (17) (TNC) automatisch eine solche Verbindung zum Ziel (Empfänger) bezüglich Übertragungsweg auswählt und aufbaut, daß diese die einwandfreie Datenübertragung gewährleistet.

FIG. 1

Die Erfindung betrifft ein intelligentes Fernmeß- und Stellsystem zum Fernmessen und Einstellen, Fernsteuern, Fernüberwachen, Fernabfrage, Protokollieren bzw. Dokumentieren.

Aus der deutschen Patentschrift DE 28 22 672 C2 ist es bekannt, ein computergesteuertes Steuergerät mit am Gerät angebrachten, drahtlos oder drahtgebunden Signale übertragenden Bedienungsorganen, wie Sensoren und Stellglieder, wobei Befehle an den Empfänger abgegeben und Steuerbefehle gespeichert und umgesetzt werden. Die Signalerfassung/-verarbeitung erfolgt nach eingeschriebenem Programm.

Nachteilig ist hierbei die nötige manuelle Einstellung für die veränderbaren Bedienfunktionen.

Aufgabe vorliegender Erfindung ist es, ein Verfahren und eine Einrichtung (Geräteeinheit oder Terminal) sowie ein Netzwerk anzugeben, mit dem es möglich ist, daß Daten (dezentral von gleichen Einheiten) gesammelt, (vor-)verarbeitet, gespeichert und automatisch und/oder periodisch oder auf Befehl (zentral) auf bestem Übertragungsweg (fern-)übertragen werden.

Die Lösung vorliegender Erfindung ist in Anspruch 1 angegeben.

In weiteren Ansprüchen und den Ausführungsbeispielen sind weitere Merkmale, insbesondere bezüglich der Geräteeinheiten/Terminals enthalten, ohne hierauf beschränkt zu sein. Abwandlungen und Kombinationen der beschriebenen und dargestellten Merkmale sind dem Fachmann möglich.

Die Erfindung ist anwendbar zur Fernüberwachung, insbesondere auf dem Gebiet des Umweltschutzes, z.B. Luftüberwachung, Gewässerüberwachung bzw. Verunreinigungen, Radioaktivität, biologisch, chemisch etc., aber z.B. auch als Verkehrsüberwachungs- und Leitsystem, beim Katastrophenschutz, wie Brandschutz, Erdbebenschutz, Überschwemmungen und dgl..

Die besonderen Vorteile des Systems sind: Beliebig viele Meßstationen (Terminals) an einer Zentrale, Datenübertragung per Funk, Lichtwellenleiter oder Zweidrahtleitung, Übertragung mit hoher Datendichte, z.B. über DATEX-P-Netz der Bundespost, automatische Fehlererfassung und -korrektur bei der Übertragung, geringster Stromverbrauch, Solargenerator optionell lieferbar, Terminals im Relaisbetrieb einsetzbar, fernsteuerbare Alarmmeldungen und fernsteuerbare Änderung der Meßparameter, insbesondere durch Übertragung anderer Meßprogramme (z.B. aus Speicher 5).

Das System dient zur Erfassung von analogen und digitalen Meßdaten an abgelegenen und/oder kaum zugänglichen Meßorten sowie zur Übertragung dieser Parameter an eine Zentralstation mittels Funkstrecke, Lichtwellenleiter, Telefonleitung oder Datenbus.

In umgekehrter Richtung können dem Terminal Einstellparameter wie Abfragerate, Grenzwerte, Kanalzahl, die Zuordnung von Funkstationen etc. über Funk übermittelt werden.

Jedes Datenterminal kann gleichzeitig als Relaisstation für andere Terminals dienen. Die Terminals können im Relaisbetrieb hintereinander geschaltet werden.

Die Erfindung betrifft ein intelligentes Fernmeß- und Stellsystem, enthalten in einer Gehäuseeinheit (Terminal) für die Erfassung, Verarbeitung und Speicherung analoger und/oder digitaler Daten und der Aufzeichnung in einem Speicher und Übertragung in einem geeigneten Übertragungsweg auf Befehl.

Das System besteht aus einem oder mehreren Terminals. An jedes Terminal können analoge Meßsignale und digitale Ein- oder Ausgänge auch mit D/A-Wandler angeschlossen werden. Die Zuordnung, ob es sich hierbei um einen Ein- oder Ausgang handelt, ist wahlfrei. Jedes Terminal verfügt über ausreichend Speicherplatz zur Zwischenspeicherung von Meßdaten. Jede Meßstation speichert in vorgegebenen Meßintervallen die Meßdaten zusammen mit der Meßkanalnummer. Die Intervalldauer ist frei wählbar und über Funk von der Zentralstation aus einstellbar. Die Daten werden zusammen mit der Uhrzeit (Zeitpunkt der Messung) entweder periodisch zu festgelegten Zeitpunkten oder auf Anforderung der Zentralstation an diese übertragen. Die Datenfernübertragung erfolgt z.B. in Paketform zusammen mit Datum, Uhrzeit, Nummer des Meßkanals sowie Stationsnamen (Funkrufzeichen), so daß eine eindeutige Zuordnung der in der Zentrale eingehenden Daten gesichert ist. Das System erlaubt eine fexible Anpassung an verschiedenen Meßaufgaben, ohne zusätzliche Änderung der Systemprogramme.

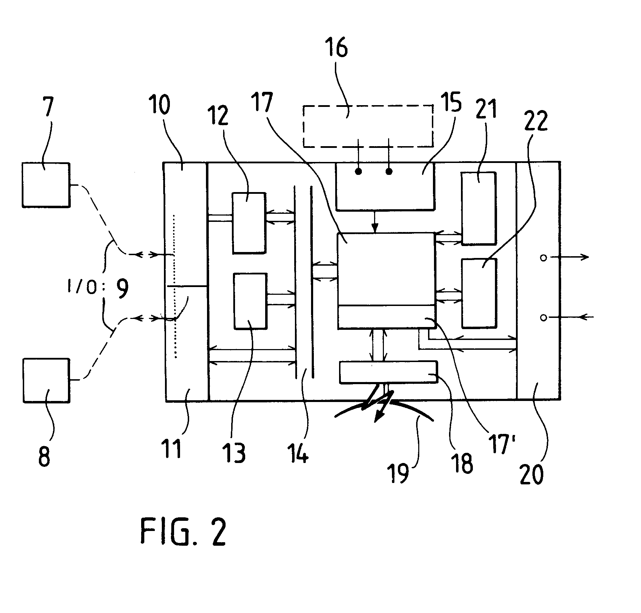

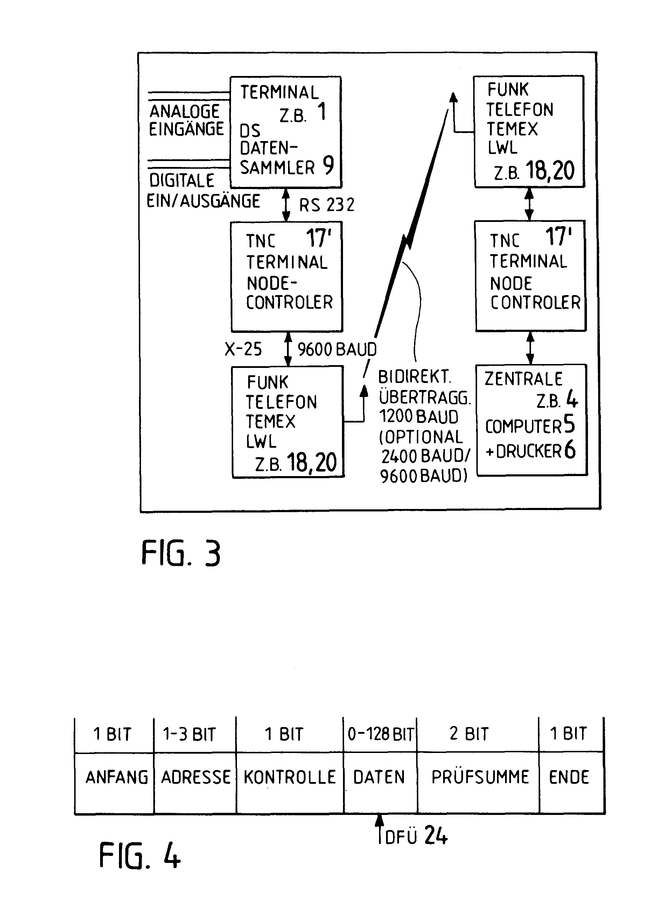

Die Ausführungsbeispiele sind dargestellt in den Figuren 1 bis 4. Es zeigen:

Fig. 1       ein Netzwerk mit Anschluß links unten zu weiteren Netzwerken gleicher Art,

Fig. 2       eine Geräteeinheit/Terminal im Aufbau als Blockschaltbild,

Fig. 3       ein Schema der Datenfernübertragung und

Fig. 4       ein Schema des Datenübertragungsverfahrens.

Fig. 6       eine Abwandlung eines Ausführungsbeispieles nach Fig. 1 in abgeschirmter/gekapselter Form mit Stecker, z.B. zum Anschluß an einen PC;

Fig. 7       ein Schaltbeispiel einer Platine für Anschluß oder Anbau/Einbau am PC oder Funkgerät;

Fig. 8       ein Funkgerät mit eingebautem Modem und Signalprozessor für Daten-, Sprach- und Bildsignalübertragung;

Fig. 9a und b       eine Taktsignalfolge wie sie für die Energieversorgung mindestens des Modems im Betrieb im Netz angewendet wird;

Fig. 10        eine Betriebsanzeige auf den Eingang eines Rufes eines Befehles oder anderer Signale und deren Übertragung gemäß Protokoll auf einem Teilfeld eines Bildschirmes des PC.

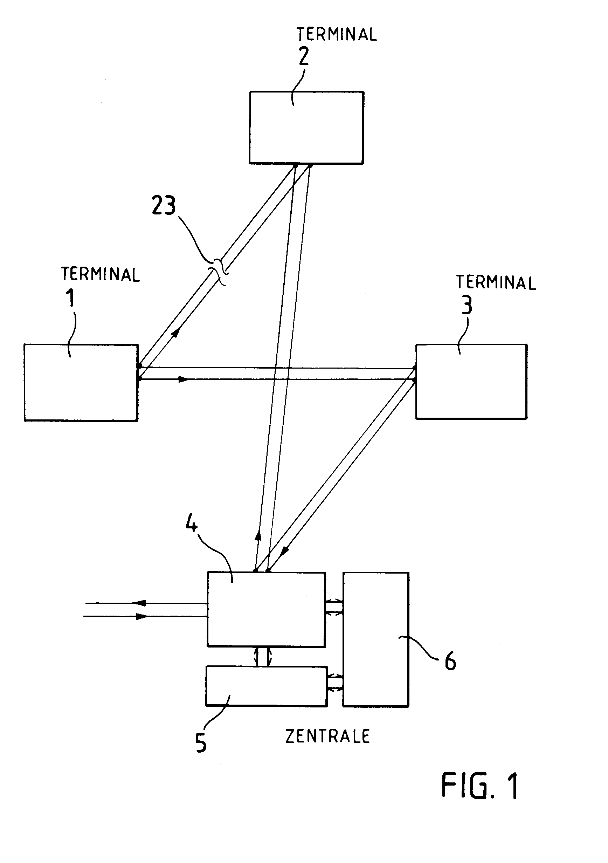

Wie Fig. 1 zeigt, kann bei einem zwischen Terminal 1 und 2 auftretendem Hindernis 23 eine vom Terminal 1 ausgesandte Datenwortfolge 24 nicht zu ihrem Ziel, z.B. Terminal 2 direkt gelangen. Nun wird diese Folge 24 (Paket) auf dem Umweg über Terminal 3 und 4 zum Ziel 2 geleitet. Dabei dienen 3 und 4 als Relaisstationen für die Übertragung (einwandfrei).

Jedes Terminal ist als Zentrale ausführbar (nicht nur 4 mit 5 und 6) und kann als Alarmzentrale o.ä. intelligentes Fernmeß- und Stellsystem dienen.

Datenübertragung als Datenpaketübermittlung:

Der Anfangsblock beinhaltet ein spezielles Datenbite als Kennzeichen des Paketanfangs sowie die Stationsnamen (Adresse) von Sender, Empfänger und bei Bedarf Relaisstationen, die das Paket zum Empfänger weiterreichen.

Als Paketinhalt werden die zu übertragenden Daten (Meßwerte, Datum, Uhrzeit, Kanalnummer) bezeichnet. Das Paketende besteht z.B. aus einem 8 bit langen Schlußzeichen und einer 16 bit langen Kontrollinformation, die sich aus den Bitewerten von Paketanfang und Paketinhalt nach dem CRC-Verfahren (Cyclic Redundancy Check) berechnet.

Die empfangene Station berechnet ebenfalls aus den empfangenen Daten diesen Wert und vergleicht ihn mit dem empfangenen Kontrollwert. Stimmen beide überein, sendet sie eine positive Quittierung zurück und erwartet das nächste Paket, andernfalls sendet sie eine negative Quittierung und erwartet die Wiederholung des Pakets.

Der verwendete CRC-Algorithmus ergibt eine Fehlersicherheit von $1,5 \times 10^{-12}$, was praktisch zur Erkennung aller auftretenden Übertragungsfehler führt, die durch Blockwiederholung korrigiert werden.

Im System ist der Anwender nicht mit den Einzelheiten der Übertragung befaßt, die Meßdaten einschließlich ihrer Kenndaten (Datum, Uhrzeit etc.) stehen nach wenigen Sekunden in verschiedenen vorgebbaren Formaten, z.B. ASCII-Textdateien auf Diskette, Festplatte oder Bildschirm zur Verfügung und können automatisch übertragen und ausgewertet werden oder auf Abruf/Fernabfrage.

Bei der Erfindung werden alle Daten mit Hilfe eines Modems über eine einzige Trägerfrequenz moduliert und übertragen.

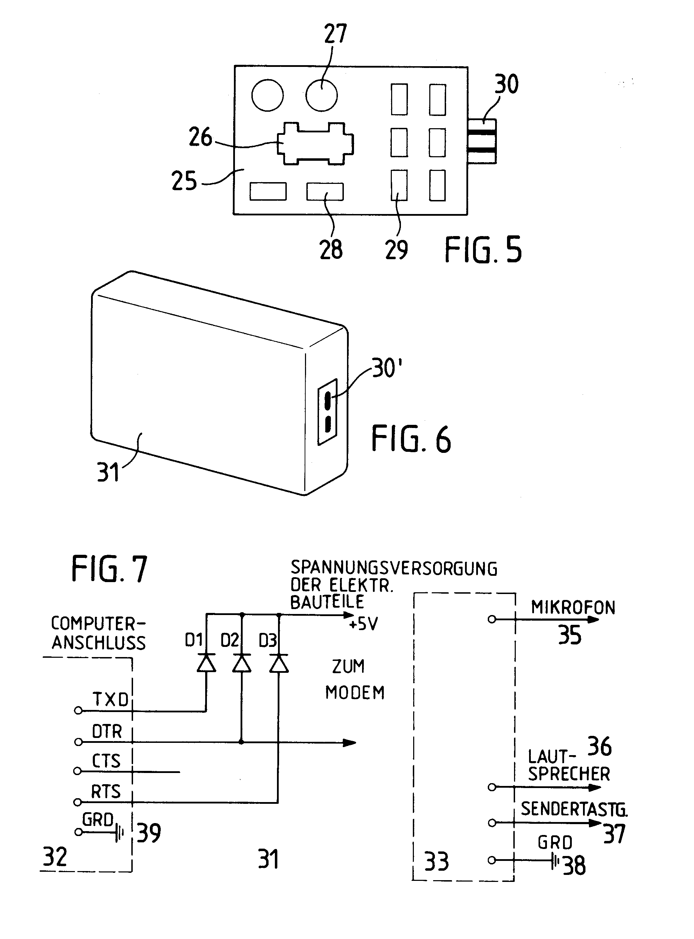

Ein Ausführungsbeispiel für eine mit einer Schnittstelle (z.B. RS 232) von einem Personalcomputer oder Arbeitsplatzrechner verbindbare Einheit ist Fig. 5 entnehmbar. Dort ist auf einer Platine 25 in Form einer Steckkarte u.a. ein Modern 26 als Bauelement ersichtlich. Die Steckkarte enthält weitere elektronische Bauelemente 22, 28, 29 und elektrische Steckanschlüsse 30 einschließlich eines Masseanschlusses (Ground).

Fig. 6 ist gegenüber Fig. 5 dahingehend abgewandelt, daß nicht nur eine Platine vorgesehen ist, auf der die elektronischen Bauelemente einschließlich Modern, z.B. als SMD aufgebaut sind, sondern darüber hinaus ein Gehäuse 31 in Form einer elektromagnetisch dichten Kapselung oder Abschirmung. Dabei ist ein Stecker 30 bzw. eine Steckbuchse 30' an einem Frontende des Gehäuses 31 vorgesehen.

In Fig. 7 ist beispielsweise ein Schaltplan der möglichen Verbindung von elektrischen Bauelementen zu einem Anschluß einer Schnittstelle am Personalcomputer PC und/oder einem Funkgerät als Signalübermittlungsgerät ersichtlich ist. In Fig. 7 ist auf der linken Seite der Anschluß an den PC und auf der rechten Seite der Anschluß an das Funkgerät, insbesondere Funksender und Empfänger ersichtlich, wobei das Modern als steckbare Einheit nach Fig. 5 oder 6 ausgeführt sein kann und an den Pfeilen in der Mitte von Fig. 7 anschließbar oder in das Funkgerät rechts direkt eingebaut sein. In Fig. 7 bedeuten die Einzelleitungen:

```
TXD  =  Sendedaten        D1 Diode
OTR  =  Empfangsort       D2   "
CTS  =  Signalstatus      D3   "
GRD  =  Masse             (gleichrichtend)
```

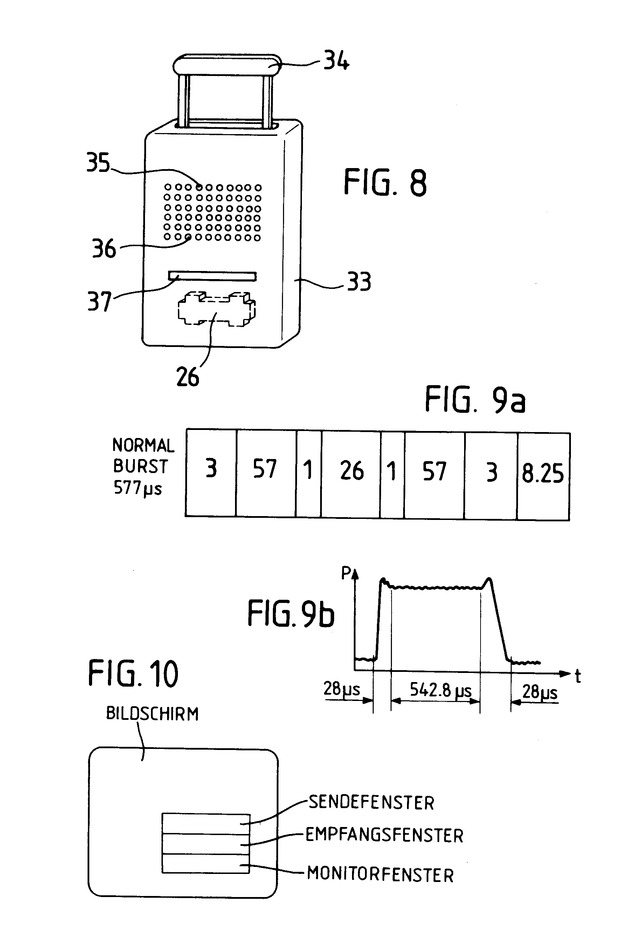

Die Strom- oder Spannungsversorgung der elektrischen Bauteile erfolgt mit etwa 0 bis + 5 Volt und reicht wenigstens für den Betrieb des Modems 26 für die Signalwandlung, vorzugsweise auch zur Versorgung der weiteren elektronischen Bauelemente 21 bis 29. Die Stromversorgung bzw. Spannungsversorgung erfolgt in einer bestimmten Taktsignalfolge wie Fig. 9. zeigt, im Burstverfahren bzw. in Signalpausen, in einer vorgegebenen Programmroutine bei geringstem Energieverbrauch. So ist eine Übertragung aller Daten sicher möglich. Nur die vorbestimmte Programmroutine gestattet überhaupt eine Signalübertragung. Deshalb ist auch hierdurch ein weitgehender Schutz der Hardware und Software vor Mißbrauch gegeben. Die Störungsarmut bzw. -freiheit wird durch die geschickte Signalwandlung durch Modulation/Demodulation nur einer einzigen Trägerfrequenz (z.B. zwischen 900 kHz und 1800 kHz) in einem Netz wie PCN, DECT, ISDN oder D-Netz oder Kombinationen dieser oder anderer Netze ermöglicht.

Fig. 8 zeigt als Beispiel ein miniaturisiertes (auf Chip oder als SMD) Funkgerät mit ausgefahrener Antenne 34 und mit einem eingebauten Modern 26 und Signalprozessor. Dieser kann ein digitaler Signalprozessor DSP sein, der bevorzugt seriell, in abgewandelter Ausführung auch parallel arbeiten kann. Der digitale Signalprozessor ist nicht nur in das Funkgerät sondern auch in das Endgerät/Terminal bzw. in eine Schnittstelle des PC's einbaubar.

Fig. 9a zeigt die Bitstruktur bei einer beispielhaften mobilen Funkübertragung im Festfrequenzmodus, z.B. in einem Nezt wie D-Netz oder GSM (geplantes europäisches Mobilfunknetz) oder DECT = Digital European Cordless Telephon oder PCN = Personal Communication Netzwerk. Letzteres Netz ist mit 900 MHz und niederiger Energie betreibbar und kompatibel zum Netz GSM.

Fig. 9b zeigt den Zeitverlauf einer resultierenden Sendeleistung. Dabei besteht jeder Zeitschlitzburst aus 148 Bit. Zwischen den einzelnen Zeitschlitzen (Abstand 8, 25 Bit) erfolgt programmgesteuert hier die Spannungsversorgung der elektrischen Bauteile wie in Fig. 7 angedeutet.

Die verwendeten 148 Bits setzen sich, z.B. so zusammen:

| 2 x 3 | Flankenformbits (Tail Bits) |
|---|---|
| 2 x 57 | Datenbits (Encrypted Bits) |
| 2 x 1 | Steuerbit (Control Bit) |
| 26 | Bit Trainingssequenz (Training Sequenz) |

Die Ansteuerung der anderen Bits erfolgt symmetrisch zur Trainingssequenz. Diese dient der Synchronisation und Fehlererkennung. Ein Steuerbit signalisiert die Art der übertragenen Daten und/oder den Kanal.

Es kann jede Art von Netzwerk für die digitale Datenübertragung herangezogen werden. Analoge Signale können zunächst in digitale Signale umgewandelt werden, z.B. Sprachdaten im PCM-Verfahren, d.h. Pulscodemodulation mit einem Codec, d.h. einem Codierer und einem Decodierer auf 32 K Bit pro Sekunde, 24 K Bit pro Sekunde oder 16 K Bit pro Sekunde, ohne hierauf beschränkt zu sein. Selbstverständlich ist auch 64 K Bit pro Sekunde, insbesondere für Sprachdaten und Telefonanschluß geeignet.

Die Datenübertragung kann einfach oder duplex erfolgen und auf mehreren Kanälen gleichzeitig und auf mehrere Arten leitungsgebunden oder nicht leitungsgebunden.

Wie Fig. 10 zeigt werden im Hintergrund abgehende Signale auf einem Sendefenster in drei Teilfenstern (windows) des PC-Bildschirmes angezeigt und empfangene Signale auf einem Empfangsfenster und auf einem weiteren Monitorfenster wird die laufende Übertragung mit Kanal angezeigt und überwacht. Dabei wird die Erkennung des Signalrufes desssen Identifizierung und Zulassung programmgesteuert angezeigt, ebenso wie die Sicherheit der fehlerfreien Übertragung gemäß Protokoll. Sollte ein Fehler vorgelegen haben, erfolgt erneute Übertragung gemäß Programm bis das Protokoll die richtige vollständige Übertragung anzeigt. Ein Signalruf oder Befehl oder Erkennungscode muß selbstverständlich nicht als Tonfolge, sondern kann in beliebiger Codierung erfolgen. Zugelassen wird er nur, wenn er in ein vorgegebenes Programm und eine vorgegebene Trägerfrequenz paßt.

Abwandlungen der gegebenen Ausführungsbeispiele können vom Fachmann gewählt werden, ohne hierdurch den Rahmen der Erfindung zu verlassen.

Es können folgende Betriebsarten für die Datenübertragung gewählt werden:
1) Ständige Überwachung, auf Einzelruf oder Sammelruf
2) Halb/bzw. Duplex
3) Grenzwertüberwachung, Schwellwertüber/unterschreitung
4) Aufzeichnung auf Festplatte, Diskette, Drucker etc. auch automatisch.

**Patentansprüche**

1.  Intelligentes Fernmeß- und Stellsystem, enthalten in einer Gehäuseeinheit (Terminal) für die Erfassung, Verarbeitung und Speicherung analoger und/oder digitaler Daten und der Aufzeichnung in einem Speicher und Übertragung in einem geeigneten Übertragungsweg auf Befehl, **dadurch gekennzeichnet,** daß jede Einheit (Terminal) mit weiteren Einheiten (beliebiger Zahl) in einem Netzwerk zusammenschaltbar ist derart, daß der in jeder Einheit eingebaute Knotenrechner (TNC) automatisch eine solche Verbindung zum Ziel (Empfänger) bezüglich Übertragungsweg auswählt und aufbaut, daß diese die einwandfreie Datenübertragung gewährleistet.

2.    System nach Anspruch 1, **dadurch gekennzeichnet,** daß die Einheiten (Terminals) in beliebiger Zahl sowohl untereinander als auch mit wenigstens einer Zentrale verbindbar sind.

3.    System nach Anspruch 1 oder 2, **dadurch gekennzeichnet,** daß die Einheiten (Terminals) an eine Zentrale anschließbar sind zur automatischen Alarmübertragung bei Über- oder Unterschreiten eines vorgegebenen Grenz- oder Schwellwertes oder Bereiches.

4.    System nach einem der vorhergehenden Ansprüche, **dadurch gekennzeichnet,** daß die Einheiten (Terminals) an eine Zentrale anschließbar sind, von der aus eine Änderung der Meßparameter, z.B. nach Art, Bereich, Betrag, Zeit, Ort auf Befehl erfolgt.

5.    System nach einem der vorhergehenden Ansprüche, **dadurch gekennzeichnet,** daß die Meßwerteübertragung von einer Einheit/Terminal zu einer anschließbaren Zentrale auf Fernabfrage aus einem Speicher erfolgt, in dem die nach einem bestimmten Programm erfaßten und gespeicherten Meßwerte abrufbar sind.

6.    System nach einem der vorhergehenden Ansprüche, **dadurch gekennzeichnet,** daß die Einheiten (Terminals) zueinander im Relaisbetrieb schaltbar sind.

7.    System nach einem der vorhergehenden Ansprüche, **dadurch gekennzeichnet,** daß in der Einheit (Terminal) wenigstens eine, vorzugsweise zwei serielle Schnittstellen zur Datenübertragung eingebaut sind.

8.    System der einem der vorhergehenden Ansprüche, **dadurch gekennzeichnet,** daß jede Einheit/Terminal eine eigene Energieversorgungseinrichtung enthält, insbesondere eine Spannungsquelle, die von außen aufladbar ist, z.B. von einem Solarmodul und auch Sende- und Empfangsmittel speist.

9.    System nach einem der vorhergehenden Ansprüche, **dadurch gekennzeichnet,** daß der in jede Einheit/Terminal eingebaute Mikroprozessor bzw. Mikrocomputer mit einem Ringspeicher und mit einer Echtzeituhr innerhalb des Gehäuses verbunden ist.

10.    System nach einem der vorhergehenden Ansprüche, **dadurch gekennzeichnet,** daß Meßwerte und/oder Stellwerte in jeder Einheit/Terminal nach vorgegebenem Programm automatisch erfaßt bzw. eingestellt werden.

11.    System nach einem der vorhergehenden Ansprüche, **dadurch gekennzeichnet,** daß jede Einheit (Terminal) Analogeingänge unabhängig von Digitaleingängen aufweist um beide Arten von Meßwerten in vorgegebenen Zeitabständen automatisch zu erfassen und abzuspeichern, wobei die analogen mit Hilfe des Mikroprozessors bzw. Mikrocomputers und diesem inhärenten A/D-Wandler umgesetzt werden, vorzugsweise vorverarbeitet z.B. auf-/abgerundet, bzw. komprimiert.

12.    System nach einem der vorhergehenden Ansprüche, **dadurch gekennzeichnet,** daß die Einheiten/Terminals bei Zusammenschaltung auf einer Frequenz senden und empfangen.

13.    System nach einem der vorhergehenden Ansprüche, **dadurch gekennzeichnet,** daß die Einheiten (Terminals) bei Zusammenschaltung eine automatische Fehlererfassung und Korrektur bei der Übertragung aufweisen derart, daß das empfangene Terminal die Datenwortlänge (Bitesumme) ermittelt und mit einem Kontrollwert vergleicht und, sobald beide übereinstimmen, eine positive Quittierung an das sendende Terminal zurückgesandt wird, anderenfalls eine negative Quittierung ausgesandt wird und die Übertragung eines Datenpakets wiederholt wird (Blockwiederholung) zwecks Korrektur bis zum fehlerfreien Empfang.

14.    System nach einem der vorhergehenden Ansprüche, **dadurch gekennzeichnet,** daß zunächst ein Einschaltbite von der Einheit (Terminal) gesendet wird, dann die Adresse (Ziel) - dann ein Kontrollbite - dann die Daten variabel nach Art und Datenlänge sowie eine Prüfsumme und zum Abschluß ein Ausschaltbite übertragen wird.

FIG. 1

FIG. 2

ANALOGE
EINGÄNGE

TERMINAL
Z.B. 1
DS
DATEN-
SAMMLER 9

DIGITALE
EIN/AUSGÄNGE

RS 232

TNC 17'
TERMINAL
NODE-
CONTROLER

X-25  9600 BAUD

FUNK
TELEFON
TEMEX
LWL
Z.B. 18,20

FUNK
TELEFON
TEMEX
LWL
Z.B. 18,20

TNC 17'
TERMINAL
NODE
CONTROLER

ZENTRALE
Z.B. 4
COMPUTER 5
+DRUCKER 6

BIDIREKT.
ÜBERTRAGG.
1200 BAUD
(OPTIONAL
2400 BAUD/
9600 BAUD)

FIG. 3

| 1 BIT | 1-3 BIT | 1 BIT | 0-128 BIT | 2 BIT | 1 BIT |
|-------|---------|-------|-----------|-------|-------|
| ANFANG | ADRESSE | KONTROLLE | DATEN | PRÜFSUMME | ENDE |

DFÜ 24

FIG. 4

FIG. 5

FIG. 6

FIG. 7

COMPUTER-
ANSCHLUSS

SPANNUNGSVERSORGUNG
DER ELEKTR.
BAUTEILE
+5V

ZUM

MODEM

MIKROFON
35

D1  D2  D3

TXD

DTR

CTS

RTS

GRD   39

32        31

LAUT-
SPRECHER   36

SENDERTASTG.
37

GRD
38

33

EP 0 526 686 A1

FIG. 8

34

35

36

37

26

33

FIG. 9a

NORMAL
BURST
577 µs

| 3 | 57 | 1 | 26 | 1 | 57 | 3 | 8.25 |
|---|----|---|----|---|----|---|------|

FIG. 9b

P

28µs | 542.8 µs | 28µs

t

FIG. 10

BILDSCHIRM

SENDEFENSTER

EMPFANGSFENSTER

MONITORFENSTER

11

Europäisches
Patentamt

**EUROPÄISCHER RECHERCHENBERICHT**

Nummer der Anmeldung

EP    92 10 2238

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-2 176 972 (ROBITON) <br><br> * Zusammenfassung * <br> * Seite 4, Zeile 56 - Zeile 64 * <br> * Seite 7, Zeile 34 - Zeile 51 * <br> * Seite 8, Zeile 39 - Seite 9, Zeile 47 * | 1-6,9, 10,12-14 | H04L12/56 <br> H04Q9/00 <br> G08C17/00 |
| Y | --- | 7,8,11 | |
| Y | ERICSSON REVIEW. <br> Bd. 64, Nr. 3, 1987, STOCKHOLM SE <br> Seiten 110 - 115; <br> J.OTTOSON: 'ERIGEN Data Logger for the <br> Supervision of Solar and Wind Systems and the <br> Collection of Meteorological Data' <br> * das ganze Dokument * | 7,8,11 | |
| A | --- | 1,3-5, 10,13,14 | |
| A | REVIEW OF SCIENTIFIC INSTRUMENTS. <br> Bd. 56, Nr. 12, Dezember 1985, NEW YORK US <br> Seiten 2328 - 2332; <br> R.VOLPICELLI ET AL.: 'Interactive Water <br> Monitoring System Accessible by Cordless <br> Telephone' <br> * das ganze Dokument * <br> --- | 1,4,5, 8-11,13, 14 | |
| A | ADVANCES IN INSTRUMENTATION. <br> Bd. 40, Nr. 1, 1985, PITTSBURGH US <br> Seiten 255 - 264; <br> S.A.DEWITT: 'Evaluating Telemetry Alternatives <br> in Water Distribution Systems' <br> * das ganze Dokument * <br><br> ----- | 1-14 | |

**RECHERCHIERTE SACHGEBIETE (Int. Cl.5)**

H04L
H04M

Der vorliegende Recherchenbericht wurde für alle Patentansprüche erstellt

| Recherchenort | Abschlußdatum der Recherche | Prüfer |
|---|---|---|
| DEN HAAG | 03 SEPTEMBER 1992 | MIKKELSEN C. |